# EUROPEAN PATENT SPECIFICATION

(11) **EP 1 362 683 B1**
(45) Date of publication and mention of the grant of the patent: **13.08.2008**
(21) Application number: 03076398.1
(22) Date of filing: 07.05.2003
(51) Int. Cl.: B29C 44/18, B29C 44/12, B60R 13/08

(54) **Improved baffle precursors**
Verbesserte Vorläuferplatten
Précurseur de bague amélioré

(30) Priority: 17.05.2002 GB 0211287
(43) Date of publication of application: 19.11.2003
(73) Proprietor: Zephyros Inc., Romeo, MI 48065 (US)
(72) Inventor: Brahim, Raid, 67129 Molsheim, Cedex (FR)
(74) Representative: Bawden, Peter Charles

(56) References cited:
- EP-A- 1 134 126
- WO-A-01/24989
- DE-A- 3 838 655

## Description

The present invention relates to baffles that may be used in hollow structures such as those found in automobiles, caravans, ships, aircraft and railroad applications. The baffles are typically used to reduce noise and airflow in such hollow structures.

Baffles are typically provided to the vehicle manufacturer as a foamable material mounted on one side of a support, the support being provided with means for attachment to the inner surface of the hollow structure. The baffle with the foamable material in its unfoamed state is mounted in the hollow structure where the foamable material is subsequently foamed. The foamable material is generally foamed at elevated temperatures. Foaming to expand the material and fill the cross section of the hollow structure is therefore accomplished by heating the hollowing structure. In a preferred embodiment the foaming is accomplished during the drying and baking process following the immersion of the hollow structure in an anticorrosion bath such as in the e coat process used in automobile manufacture.

In this way the anticorrosion coating may reach all the surfaces of the hollow structure and the foaming may be accomplished after the anticorrosion treatment.

In order to have sufficient expansion to provide an economic and effective baffle the foamable material should have a high degree of expansion typically from 700 to 1000%. In order for this to be accomplished the foamable materials are generally soft and have a low melt viscosity. This in turn means that they can flow readily when heated which may lead to sag under gravity resulting in a non-uniform foam structure. An additional concern is that in some processes involving the electrocoat process the structure is subject to a two stage baking process involving an initial pre-bake oven operating at a lower temperature and a subsequent higher temperature oven. In processes of this nature there can also be the problem that the foamable material will start to flow in the initial oven and may fall under gravity thus providing a layer of non-uniform thickness for the foaming in the subsequent oven resulting in non-homogenous foaming, uneven foam and uneven baffle properties.

The foamable material is typically an ethylene copolymer such as an ethylene vinyl ester or ethylene acrylate ester copolymer or it may be an ethylene propylene copolymer or ethylene, propylene diene copolymer rubber. One difficulty that arises with the existing technology as described is that the foamable material has a low viscosity as its temperature is increased to the foaming temperature. Accordingly since it is unusual for a baffle to be mounted in a location where foaming takes place vertically upwards the foamable material tends to flow downwards under gravity as the temperature is increased. This leads to a non-uniform thickness of the foam and also the need to use larger amounts of the foamable material to ensure adequate thickness of the foam at the thinner upper regions of the baffle.

It has also not been possible to provide baffles which have foamable material on both sides of a support to enable foam to be provided on both sides of the support. Further it has been necessary to produce separate baffles for use in for example the left and right sides of a vehicle.

We have now found that these difficulties may be overcome if the baffle precursor is a sandwich structure comprising surface plates having a cellular structure and an inner layer of foamable material.

EP-A-1 134 126 describes a baffle precursor according to the preamble of claim 1.

The present invention therefore provides a baffle precursor according to claim 1.

In a preferred embodiment both surfaces of the support plate are cellular and the foamable material provides a foam covering both outer surfaces. The baffles will therefore have foam on both sides of the support. Furthermore, the baffles will have comparable performance in terms of sound reduction and airflow reduction on both sides of the baffle which has hitherto not been possible. The invention also provides single baffle precursors that may be used to produce baffles on both the left and right side of automobiles.

The optimum cellular structure for the plates will depend upon the nature of the foamable material, the environment within which the baffles are to be used, the amount of foamable material to be used and the final desired foam volume. The use of the cellular structure in the plates has the advantage that as the foam expands through the cells and into the air it will present a large surface area. This large area will be cooled rapidly thus providing integrity to foam rapidly upon foam formation. This, in turn reduces the tendency of the foaming or foamed material to flow other than due to the foaming action. The walls of the cells (or holes) in the plates will also provide mechanical keys for the foam which will also reduce its tendency to flow under gravity.

The plates having the cellular structure should be made of materials which will withstand the temperatures that are used to foam the foamable material. In a preferred embodiment of the present invention, the foaming temperature is the temperature of the curing oven in the electrocoat process used in automobile manufacture. This is typically between 130°C and 200°C, more typically between 150°C and 170°C. The plates may therefore be made of any suitable material which can withstand these temperatures. Suitable materials include metals and high melting thermoplastics such as polyamide which may or may not be reinforced with fibres such as glass fibres, carbon fibres and metal fibres. The thickness of the plates will depend upon the environment in which the baffle is to be used however, we prefer to use plates of thickness from 0.5 to 2.5 mm more preferably from 1 to 1.5 mm.

The cellular structure may consist of a series of holes in the plates or may be any other design to match the needs of the system.

The nature and thickness of the core of the foamable material will depend upon the circumstances. However we prefer that the foamable material be a thermoplastic material such as a copolymer of ethylene and a vinyl and/or acrylic ester such as vinyl acetate, vinyl propionate, methyl acrylate, ethyl acrylate and butyl acrylate. Alternatively the foamable material may be a rubbery polymer such as an ethylene propylene copolymer rubber or more desirably an ethylene, propylene diene terpolymer rubber. The material will contain a blowing agent and perhaps an activator to ensure that the material foams at the desired temperature. In addition the material may contain other additives such as stabilisers and antioxidants.

The foamable material preferably has a thickness of from 2 to 6 mm, preferably from 3 to 5 mm and we have found that the techniques of the present invention enable improved baffle performance and produce a more homogenous foam on both sides of the baffle when compared with previous systems which employed a 5 to 10 mm, more typically 5 to 8 mm thick layer of foamable material to produce a baffle having foam and acoustic properties on one side of the baffle only. Accordingly an additional benefit of the present invention is that comparable or better baffle performance may be obtained using less foamable material.

The amount of foamable material should, however, be such that a continuous foam layer is formed after the foamable material has egressed through the cellular structure. As the foam egresses through the cells (or holes) in the plate it will form mushroom like structures based on each cell (or hole). These mushroom like structures will expand as more foamable material pushes through the cells. Whilst it is not important that the mushroom like structures fully integrate with each other it is important that they are in contact and bond in a manner that provides a continuous foam layer to provide the desired barrier to air flow.

The baffle should be provided with a means for attachment within the hollow structure. The attachment may be part of the baffle which engages with the internal surface of the hollow structure, for example, it may be a clip which is designed to fit into a hole in the internal surface of the hollow structure. In this instance the clip or clips may conveniently be integral with one or more of the plates of the baffle precursor.

Alternatively the attachment means, such as a clip may be formed on the internal surface of the hollow structure and the baffle itself provided with means to engage with the clip. Hereagain these means may be integral with one or more of the plates of the baffle precursor and where the plates are formed by injection moulding they may be integrally moulded.

The two plates are joined by a hinge so that they can be superimposed upon each other with the foamable material there between. In a preferred of this embodiment the attachment means may be a clip and may be such that part of the clip is integral with one plate of the baffle and another part of the clip is integral with the other plate of the baffle. The two parts of the clip being such that when the plates are superimposed upon each other they engage with each other to hold the two plates in position and also to form the clip that can be inserted into a hole in the internal surface of the hollow structure to hold the baffle precursor in place. According to the needs of the structure one or more attachment clips may be provided in this manner.

EP-A-1 134 126 describes a plate system according to the preamble of claim 8.

Accordingly in another embodiment the invention provides a plate system according to claim 8.

It is preferred that the plate system be integrally moulded from thermoplastic materials, glass filled polyamide or polypropylene being particularly preferred due to their ability to form moulded hinges.

The foamable material may be provided between the plate structure as a cut or stamped strip or by spot deposition or other suitable means.

The present invention is illustrated by reference to the accompanying schematic drawings in which:

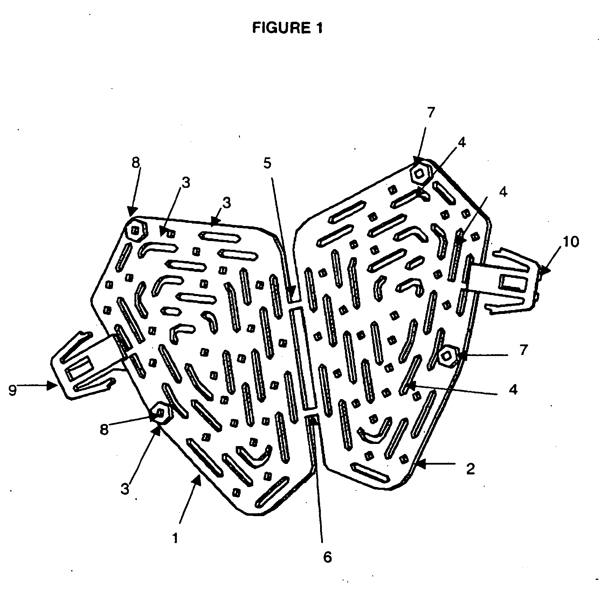

Figure 1 shows a plate system according to the present invention that can be used in the production of the baffle precursors of the invention. The plate system consists of two plates (1) and (2) each of which are provided with a series of holes designated (3) in plate (1) and (4) in plate (2). The plates are joined by integrally moulded hinges (5) and (6). Stops (7) and (8) are also provided on the plates to provide a gap of predetermined thickness between the plates when they are superimposed. The gap is for the layer of foamable material. A part (9) of an attachment clip is integral with plate (1) and another part (10) of the attachment chip is integral with plate (2).

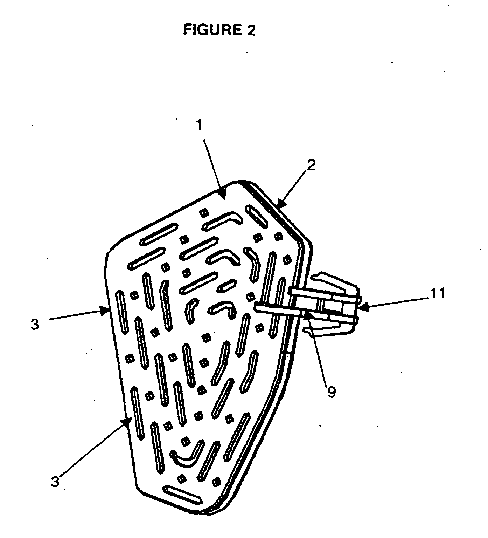

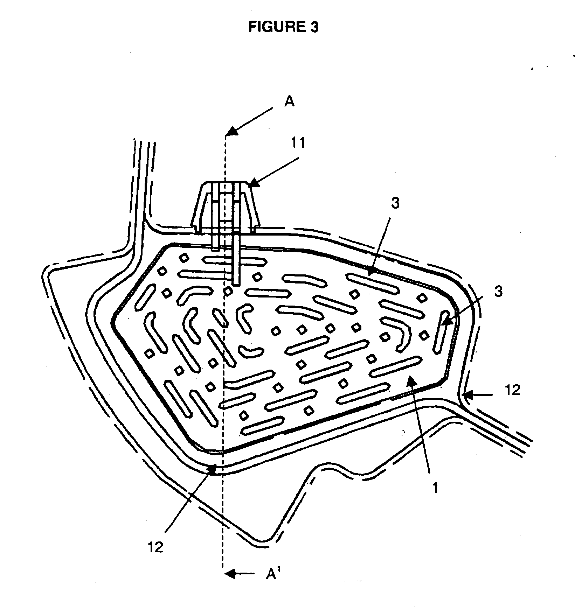

Figure 2 shows how the two plates of the plate system of Figure 1 may be superimposed to form a sandwich structure baffle precursor with a foamable material (not shown) between the plates and provided with an integral clip (11) for attachment to the internal surface of a hollow member. Figure 3 shows the baffle precursor shown in Figure 3 mounted within a hollow structure (12) which may for instance be a pillar such as an A, B or C pillar of an automobile.
Figure 4B is a cross section through the line A-A¹ of Figure 3 showing the foamable layer (13) between Plates (1) and (2).
Figure 4C shows the baffle precursor of Figure 4A after foaming has commenced.

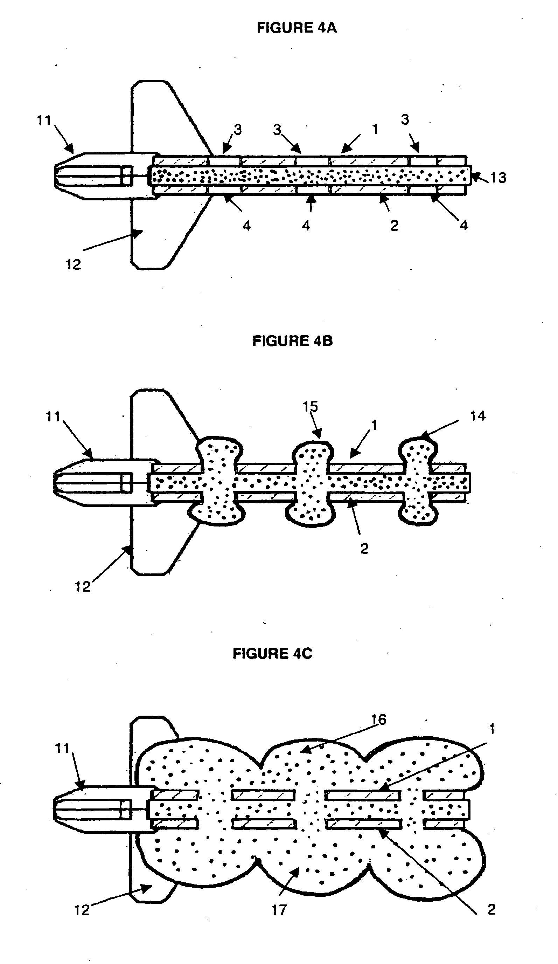

Figure 4B shows the baffle produced from the precursor of Figure 4A when foaming is complete.
Figure 4A shows the pair of plates (1) and (2) each of which is provided with a series of holes designated (3) in plate (1) and (4) in plate (2). Sandwiched between plates (1) and (2) is a layer of foamable material (13). The baffle precursor of Figure 4A is attached within the hollow structure (12) by the clip (11).

The system shown in Figure 4A may then be heated so that the foamable material (13) begins to expand as shown in Figure 4B. As the foamable material (13) begins to expand it will egress through the holes (3) and (4) (shown in Figure 4A) and will emerge initially as mushroom shaped structures (14) and (15) through plates (1) and (2) respectively. The large surface area of the mushroom structure will enhance the cooling of the foaming material and reduce its tendency to flow. Furthermore the extremities of the holes (3) and (4) will provide a mechanical key for the foam.

Figure 4C illustrates how upon further expansion the mushrooms (14) and (15) grow so that they overlap and interact to provide a foam structure (16) and (17) over both sides of the entire area of the baffle and filling the cavity provided by the hollow structure (12).

The techniques of the present invention therefore enable the production of a baffle having a more uniform foam structure, having equal baffle properties on two sides and produced from a smaller amount of foamable material.

## Claims

1. A baffle precursor comprising a pair of superimposed support plates (1) and (2) joined by a hinge (5) and (6) at least one of whose surfaces has a cellular structure (3) and (4) with a foamable material (13) contained between the plates wherein the cellular structure is such that when foamed the foamable material (13) expands and passes through the cellular structure (3) and (4) of the plate or plates (1) and (2) and expands so that the entire outer surface of the cellular support plate or plates are covered with foam (14) and (15) **characterised in that** the hinge (5) and (6) enables the two plates (1) and (2) to be superimposed upon each other with the foamable material (13) therebetween.

2. A baffle precursor according to Claim 1, in which both support plates (1) and (2) are cellular and the foamable material (13) provides a foam (14) and (15) covering both outer surfaces.

3. A baffle precursor according to Claim 1 or Claim 2, in which the plates (1) and (2) having the cellular structure are made of materials which will withstand the temperatures that are used to foam the foamable material (13).

4. A baffle precursor according to Claim 3, in which the plates (1) and 2) are of metal or high melting thermoplastics such as polyamide which may or may not be reinforced with fibres such as glass fibres, carbon fibres and metal fibres.

5. A baffle precursor according to any of the preceding Claims in which the plates (1) and (2) are of thickness from 0.5 to 2.5 mm more preferably 1 to 1.5 mm.

6. A baffle precursor according to any of the preceding Claims in which the foamable material (13) is a thermoplastic material such as a copolymer of ethylene and a vinyl and/or acrylic ester such as vinyl acetate, vinyl propionate, methyl acrylate, ethyl acrylate and butyl acrylate or a rubbery polymer such as an ethylene propylene copolymer rubber or more desirably an ethylene, propylene dieneter polymer rubber.

7. A baffle precursor according to any of the preceding Claims provided with a means for attachment (11) within a hollow structure (12).

8. A plate system for use in the production of baffle precursors according to Claim 1 comprising two plates (1, 2) at least one of the plates having a cellular structure (3), **characterised by that** the plates are hinged so that they may be superimposed upon each other, with the foamable material (13) therebetween.

9. A plate system according to Claim 8 in which each plate (1) and (2) carries part of an attachment means whereby the attachment means is formed when the plates are superimposed and the parts of the attachment means (11) engage to hold the plates together.

10. A plate system accordingly to Claim 8 or Claim 9, moulded from thermoplastic materials.

11. A baffle precursor comprising a plate system (1) and (2) according to any of Claims 8 to 10, wherein the two plates (1) and (2) are superimposed and a foamable material (13) is provided between the plates.

12. A process for producing sound insulation in a hollow structure comprising placing a baffle precursor according to any of Claims 1 to 7 and Claim 11 in the hollow structure and heating to cause the foamable material to foam.

13. A process according to Claim 12 in which the heating is accomplished in an oven used during automobile manufacture.

14. A process according to Claim 13 in which the oven is the oven used in the e coat anticorrosion process.

## Patentansprüche

1. Vorläuferplatte, die ein Paar überlagernde Trägerplatten (1) und (2) umfasst, die durch ein Scharnier (5) und (6) verbunden sind, wobei mindestens eine ihrer Oberflächen über eine zellulare Struktur (3) und (4) mit einem zwischen den Platten enthaltenen verschaumbaren Material (13) verfügt, wobei die zellulare Struktur dergestalt ist, dass sich das verschaumbare Material (13), wenn es verschaumt wird, ausdehnt und durch die zellulare Struktur (3) und (4) der Platte oder der Platten (1) und (2) passiert, und sich so ausdehnt, dass die gesamte äußere Oberfläche der zellularen Trägerplatte oder -platten mit einem Schaum (14) und (15) bedeckt werden, **dadurch gekennzeichnet, dass** das Scharnier (5) und (6) die zwei Platten (1) und (2) dazu befähigt, mit dem verschaumbaren Material (13) dazwischen übereinander angeordnet zu werden.

2. Vorläuferplatte gemäß Anspruch 1, wobei beide Trägerplatten (1) und (2) zellular sind und das verschaumbare Material (13) einen Schaum (14) und (15) zur Verfügung stellt.

3. Vorläuferplatte gemäß Anspruch 1 oder Anspruch 2, wobei die Platten (1) und (2), die über die zellulare Struktur verfügen, aus Materialien bestehen, die den Temperaturen standhalten, die verwendet werden, um das verschaumbare Material (13) zu verschaumen.

4. Vorläuferplatte gemäß Anspruch 3, wobei die Platten (1) und (2) aus Metall oder Thermoplastkunststoffen mit hohem Schmelzpunkt, wie zum Beispiel Polyamiden, bestehen, die mit Fasern, wie zum Beispiel Glasfasern, Kohlenstofffasern und Metallfasern, verstärkt sein können, oder nicht.

5. Vorläuferplatte gemäß einem der vorangehenden Ansprüche, wobei die Platten (1) und (2) über eine Dicke von 0,5 bis 2,5 mm, vorzugsweise 1 bis 1,5 mm, verfügen.

6. Vorläuferplatte gemäß einem der vorangehenden Ansprüche, wobei das verschaumbare Material (13) ein thermoplastisches Material ist, wie zum Beispiel ein Copolymer von Ethylen und ein Vinyl- und/oder Acrylester, wie zum Beispiel Vinylacetat, Vinylpropionat, Methylacrylat, Ethylacrylat und Butylacrylat, oder ein gummiartiges Polymer, wie zum Beispiel ein Ethylen-Propylen-Copolymer-Gummi, oder wünschenswerter ein Ethylen-Propylen-Dieneter-Polymer-Gummi.

7. Vorläuferplatte gemäß einem der vorangehenden Ansprüche, die mit einem Mittel zur Befestigung (11) in einer hohlen Struktur (12) ausgestattet ist.

8. Plattensystem zur Verwendung bei der Herstellung von Vorläuferplatten gemäß Anspruch 1, die zwei Platten (1, 2) umfassen, wobei mindestens eine der Platten über eine zellulare Struktur (3) verfügt, **dadurch gekennzeichnet, dass** die Platten zusammenklappbar sind, sodass sie mit dem verschaumbaren Material (13) dazwischen übereinander angeordnet werden können.

9. Plattensystem gemäß Anspruch 8, wobei jede Platte (1) und (2) einen Teil eines Befestigungsmittels trägt, wobei das Befestigungsmittel gebildet wird, wenn die Platten übereinander angeordnet werden, und die Teile des Befestigungsmittels (11) ineinander greifen, um die Platten zusammenzuhalten.

10. Plattensystem gemäß Anspruch 8 oder Anspruch 9, das aus thermoplastischen Materialien geformt ist.

11. Vorläuferplatte, die ein Plattensystem (1) und (2) gemäß einem der Ansprüche 8 bis 10 umfasst, wobei die beiden Platten (1) und (2) übereinander angeordnet sind und ein verschaumbares Material (13) zwischen den Platten zur Verfügung gestellt wird.

12. Verfahren zum Herstellen einer Schallisolation in einer hohlen Struktur, das umfasst: Anordnen einer Vorläuferplatte gemäß einem der Ansprüche 1 bis 7 und Anspruch 11 in der hohlen Struktur und Heizen, um zu bewirken, dass das verschaumbare Material schäumt.

13. Verfahren gemäß Anspruch 12, wobei das Heizen in einem Ofen durchgeführt wird, der während einer Automobilherstellung verwendet wird.

14. Verfahren gemäß Anspruch 13, wobei der Ofen ein Ofen ist, der in dem E-Coat-Rostschutzverfahren verwendet wird.

## Revendications

1. Précurseur de déflecteur comprenant une paire de plaques de support superposées (1) et (2) réunies par une charnière (5) et (6), dont au moins l'une des surfaces a une structure cellulaire (3) et (4) avec un matériau expansible (13) contenu entre les plaques, la structure cellulaire étant telle que, lorsqu'il est expansé, le matériau expansible (13) s'expanse et passe à travers la structure cellulaire (3) et (4) de la plaque ou des plaques (1) et (2) et s'expanse de manière que la totalité de la surface extérieure de la plaque ou des plaques de support cellulaire(s) soit recouverte de mousse (14) et (15), **caractérisé en ce que** la charnière (5) et (6) permet aux deux plaques (1) et (2) d'être superposées l'une sur l'autre avec le matériau expansible (13) entre celles-ci.

2. Précurseur de déflecteur selon la revendication 1, dans lequel les deux plaques de support (1) et (2) sont cellulaires et le matériau expansible (13) produit une mousse (14) et (15) recouvrant les deux surfaces extérieures.

3. Précurseur de déflecteur selon la revendication 1 ou la revendication 2, dans lequel les plaques (1) et (2) ayant la structure cellulaire sont réalisées en des matériaux qui supporteront les températures qui sont utilisées pour expanser le matériau expansible(13).

4. Précurseur de déflecteur selon la revendication 3, dans lequel les plaques (1) et (2) sont en métal ou en matériau thermoplastique à point de fusion élevé, tel qu'un polyamide, qui peut ou non être renforcé par des fibres telles que des fibres de verre, des fibres de carbone et des fibres de métal.

5. Précurseur de déflecteur selon l'une quelconque des revendications précédentes, dans lequel les plaques (1) et (2) ont une épaisseur comprise entre 0,5 et 2,5 mm, et, de façon plus préférable, entre 1 et 1,5 mm.

6. Précurseur de déflecteur selon l'une quelconque des revendications précédentes, dans lequel le matériau expansible(13) est un matériau thermoplastique tel qu'un copolymère d'éthylène et d'un ester de vinyle et/ou acrylique tel que de l'acétate de vinyle, du propionate de vinyle, de l'acrylate de méthyle, de l'acrylate d'éthyle et de l'acrylate de butyle ou un polymère du type caoutchouc tel qu'un caoutchouc copolymère éthylène-propylène, ou, de façon plus souhaitable, un caoutchouc terpolymère diène éthylène propylène.

7. Précurseur de déflecteur selon l'une quelconque des revendications précédentes, muni de moyens pour la fixation (11) à l'intérieur d'une structure creuse (12).

8. Système de plaques destiné à être utilisé dans la production de précurseurs de déflecteurs selon la revendication 1, comprenant deux plaques (1, 2), au moins l'une des plaques ayant une structure cellulaire (3), **caractérisé en ce que** les plaques sont articulées de telle sorte qu'elles puissent être superposées l'une sur l'autre, avec le matériau expansible (13) entre celles-ci.

9. Système de plaques selon la revendication 8, dans lequel chaque plaque (1) et (2) porte une partie de moyens de fixation, grâce à quoi les moyens de fixation sont formés lorsque les plaques sont superposées et les parties des moyens de fixation (11) viennent en prise de façon à maintenir les plaques ensemble.

10. Système de plaques selon la revendication 8 ou la revendication 9, moulé à partir de matériaux thermoplastiques.

11. Précurseur de déflecteur comprenant un système de plaques (1) et (2) selon l'une quelconque des revendications 8 à 10, dans lequel les deux plaques (1) et (2) sont superposées et un matériau expansible (13) est disposé entre les plaques.

12. Procédé pour produire une isolation phonique dans une structure creuse, comprenant la disposition d'un précurseur de déflecteur selon l'une quelconque des revendication 1 à 7 et la revendication 11 dans la structure creuse et un chauffage de façon à provoquer l'expansion du matériau expansible.

13. Procédé selon la revendication 12, dans lequel le chauffage est accompli dans un four utilisé durant la fabrication d'automobiles.

14. Procédé selon la revendication 13, dans lequel le four est le four utilisé dans le processus anticorrosion par électrodéposition e-coat.
